# EUROPEAN PATENT SPECIFICATION

(11) **EP 3 816 615 B1**
(45) Date of publication and mention of the grant of the patent: **21.08.2024**
(21) Application number: 19800557.1
(22) Date of filing: 21.03.2019
(51) Int. Cl.: G01N 23/04

(54) **RADIATION INSPECTION SYSTEM AND RADIATION INSPECTION METHOD**
STRAHLUNGSINSPEKTIONSSYSTEM UND STRAHLUNGSINSPEKTIONSVERFAHREN
SYSTÈME D'INSPECTION DE RAYONNEMENT ET PROCÉDÉ D'INSPECTION DE RAYONNEMENT

(30) Priority: 09.05.2018 CN 201810437641
(43) Date of publication of application: 05.05.2021
(73) Proprietor: Tsinghua University, Haidian District Beijing 100084 (CN); Nuctech Company Limited, TongFang Building Shuangqinglu Haidian District Beijing 100084 (CN)
(72) Inventor: LI, Ying, Beijing 100084 (CN); LI, Jianmin, Beijing 100084 (CN); ZONG, Chunguang, Beijing 100084 (CN); LI, Yuanjing, Beijing 100084 (CN); LI, Yulan, Beijing 100084 (CN); CHEN, Zhiqiang, Beijing 100084 (CN); ZHANG, Li, Beijing 100084 (CN)
(74) Representative: Meissner Bolte Partnerschaft mbB
(86) International application number: PCT/CN2019/078990
(87) International publication number: WO 2019/214348

(56) References cited:
- EP-A1- 3 109 678
- EP-A2- 2 988 150
- WO-A1-2004/010127
- WO-A1-2008/031313
- CN-A- 1 916 611
- CN-A- 101 231 253
- CN-A- 103 984 035
- CN-A- 107 390 280
- CN-A- 108 398 444
- CN-U- 208 283 313
- US-A- 5 392 034
- US-B1- 7 453 987
- US-B1- 7 453 987

## Description

### RELATED APPLICATION

The present application is based on and claims priority to Chinese patent application No. 201810437641.1 entitled "Radiation Inspection System and Radiation Inspection Method" filed on May 9, 2018.

### FIELD

The present disclosure relates to the field of radiation inspection technology, in particular to a radiation inspection system according to claim 1, and a radiation inspection method according to claim 7 for inspecting a vehicle to be inspected by using the radiation inspection system.

### BACKGROUND

Radiation imaging is a technology that uses a radiation ray to observe the interior of an object. This technology can obtain information such as the internal structure and density of the object without destroying the object. It has been widely applied in the fields of medical and health, national economy, scientific research and the like. Chest fluoroscopy in hospitals and security checks at stations and airports are the most common examples in daily life. In the process of inspection on a vehicular cargo on a vehicle at customs, a port or other place, this technology can achieve inspection of the cargo without opening a container, which improves the inspection efficiency. To reduce the radiation influence on a vehicle driver, the radiation energy or dose of a radiation source is restricted to some extent. However, for a heavy-load cargo, scanning inspection by a radiation ray of low energy or dose may have problems such as the radiation ray being unable to penetrate therethrough, so certain radiation energy or dose needs to be guaranteed to improve the accuracy of inspection.

US 7 453 987 B1 provides a method and system for high energy, low radiation power X-ray imaging of the contents of a target automatically detecting highlight and identify high-Z materials utilizing single and/or dual energy sources with x-ray and neutron detectors. The methods and systems are applied to the imaging of containerized cargo and cargo vehicles.

EP 2 988 150 A2 discloses a vehicle inspection system comprising: a radiation source, an inspection passage enabling a vehicle to pass, a dragging system comprising a first and a second dragging means arranged along a vehicle dragging direction; in this direction, the first dragging means is arranged at the upstream of the second dragging means, and a separating section is arranged between these dragging means, so these dragging means are separated by a preset distance.

WO 2008/031313 A1 relates to a multiple DR/CT detection device of containers including at least two gantries with detecting section along translational traction mechanism. The gantry can be a rotary gantry which rotatable or positioned in a given direction for obtaining the tomography images of the objects or the projection images of the objects along the given direction; or a fixed gantry which only positioned in a direction for obtaining the projection images of the direction; or a half-fixed gantry can positioned in a few direction; or any combination of the rotary gantry or the half-fixed gantry or the fixed gantry.

WO 2004/010127 A1 discloses a scanning unit for identifying contraband within objects moving through the unit along a first path. The scanning unit includes at least one source of a beam of radiation movable across a second path that is transverse to the first path and extends partially around the first path. A stationary detector transverse to the first path also extends partially around the first path, positioned to detect radiation transmitted through the object during scanning.

EP 3 109 678 A1 provides a dual-mode rapidly-passing type moving target radiation inspection system including a radiation source, a collimator, sensor units, a control module, a radiation detector and a radiation imaging device. The sensor units are used for identifying the type of a moving target and monitoring the position of the moving target in an inspection channel; the control module is used for controlling the radiation source to emit rays in a preset working mode on the basis of the type and the position of the moving target; the preset working mode corresponds to the type of the moving target, and the rays emitted by the radiation source in different working modes differ in dosage rate. Also disclosed is a dual-mode rapidly-passing type moving target radiation inspection method.

### SUMMARY

According to an aspect of the present disclosure, a radiation inspection system is provided, in which different inspection modes may be selected for different vehicles, thereby both achieving the penetration capability for radiation inspection of different vehicles and meeting the passing rate requirement of the vehicles. Moreover, it can achieve scanning inspection on the vehicles at two viewing angles, i.e. a horizontal viewing angle and a vertical viewing angle. The present disclosure further discloses a radiation inspection method for inspecting a vehicle to be inspected by using the radiation inspection system described above.

A first aspect of the present disclosure discloses a radiation inspection system having a standard inspection mode and a rapid inspection mode, the system including:
a stationary inspection equipment, which has a first inspection channel for a vehicle to be inspected to pass through and includes a vertical viewing angle inspection device for radiation inspection on a top side or a bottom side of the vehicle to be inspected; wherein in the standard inspection mode, the vertical viewing angle inspection device outputs a first radiation scanning ray to inspect the vehicle to be inspected traveling through the first inspection channel; and in the rapid inspection mode, the vertical viewing angle inspection device outputs a second radiation scanning ray to inspect the vehicle to be inspected traveling through the first inspection channel; and
a movable inspection equipment, which is arranged movably relative to the stationary inspection equipment and has a second inspection channel for the vehicle to be inspected to pass through and includes a horizontal viewing angle inspection device for scanning inspection on sides of the vehicle to be inspected; wherein in the standard inspection mode, the movable inspection equipment moves along a length direction of the vehicle to be inspected, and the horizontal viewing angle inspection device outputs a third radiation scanning ray to inspect the vehicle to be inspected passing through the second inspection channel; and in the rapid inspection mode, the movable inspection equipment is fixed, and the horizontal viewing angle inspection device outputs a fourth radiation scanning ray to inspect the vehicle to be inspected passing through the second inspection channel; wherein the output energy of the third radiation scanning ray is higher than that of the fourth radiation scanning ray, and/or the dose of the third radiation scanning ray is higher than that of the fourth radiation scanning ray.

In some embodiments, the radiation inspection system further includes a vehicular cargo determination device for determining whether a vehicular cargo on the vehicle to be inspected is a light-load cargo or a heavy-load cargo, wherein
when the vehicular cargo determination device determines that the vehicular cargo is a heavy-load cargo, the radiation inspection system switches to the standard inspection mode; and
when the vehicular cargo determination device determines that the vehicular cargo is a light-load cargo, the radiation inspection system switches to the rapid inspection mode.

In some embodiments, the radiation inspection system further includes a control device, which is in signal connection with the vehicular cargo determination device, the stationary inspection equipment and the movable inspection equipment, the control device configured to receive a determination result that the vehicular cargo is a light-load cargo or a heavy-load cargo as determined by the vehicular cargo determination device, and manipulate the stationary inspection equipment and the movable inspection equipment according to the determination result, so that the radiation inspection system automatically switches between the standard inspection mode and the rapid inspection mode.

In some embodiments, the vehicular cargo determination device includes a weighing device for weighing the vehicle to be inspected, and determines whether the vehicular cargo on the vehicle to be inspected is a light-load cargo or a heavy-load cargo according to a weighing result from the weighing device.

In some embodiments, the output energy of the third radiation scanning ray is higher than that of the first radiation scanning ray and the second radiation scanning ray, and/or the output dose of the third radiation scanning ray is higher than that of the first radiation scanning ray and the second radiation scanning ray.

In some embodiments, the radiation inspection system further includes:
a first detection unit, which detects whether the vehicle to be inspected enters an inspection area of the radiation inspection system; and/or
a second inspection unit, which is coupled with the vertical viewing angle inspection device, and detects that a part of the vehicle to be inspected that needs radiation protection passes the vertical viewing angle inspection device and generates a first passing signal, the vertical viewing angle inspection device outputting the first radiation scanning ray or the second radiation scanning ray after receiving the first passing signal; and/or
a third detection unit, which is coupled with the horizontal viewing angle inspection device, and detects that the part of the vehicle to be inspected that needs radiation protection passes the horizontal viewing angle inspection device and generates a second passing signal, the horizontal viewing angle inspection device outputting the third radiation scanning ray or the fourth radiation scanning ray after receiving the second passing signal.

A second aspect of the present disclosure further provides a radiation inspection method for inspecting a vehicle to be inspected by using the radiation inspection system described in any item of the first aspect of the present disclosure, the method including:
selecting one inspection mode from the standard inspection mode and the rapid inspection mode according to the character of the vehicular cargo on the vehicle to be inspected; and
inspecting the vehicle to be inspected in the selected inspection mode.

In some embodiments, selecting one inspection mode from the standard inspection mode and the rapid inspection mode according to the character of the vehicular cargo on the vehicle to be inspected includes determining the vehicular cargo on the vehicle to be inspected to be a light-load cargo or a heavy-load cargo according to the character of the vehicular cargo, wherein when the vehicular cargo is determined to be a heavy-load cargo, the standard inspection mode is selected; and when the vehicular cargo is determined to be a light-load cargo, the rapid inspection mode is selected.

In some embodiments, the character of the vehicular cargo includes at least one of cargo category, cargo quantity, cargo weight, cargo density, cargo structure and cargo loading method.

In some embodiments, when the vehicle to be inspected is inspected in the standard inspection mode, the method includes:
after the part of the vehicle to be inspected that needs radiation protection has passed the vertical viewing angle inspection device, the vertical viewing angle inspection device starts outputting the first radiation scanning ray; and/or
after the vehicle to be inspected is parked, the horizontal viewing angle inspection device outputs the third radiation scanning ray.

In some embodiments, when the vehicle to be inspected is inspected in the rapid inspection mode, the method includes:
after the part of the vehicle to be inspected that needs radiation protection has passed the vertical viewing angle inspection device, the vertical viewing angle inspection device outputs the second radiation scanning ray; and/or
after the part of the vehicle to be inspected that needs radiation protection has passed the horizontal viewing angle inspection device, the horizontal viewing angle inspection device outputs the fourth radiation scanning ray.

Based on the radiation inspection system provided by the present disclosure, different inspection modes may be selected for different vehicles while ensuring the safety of the radiation dose for a person. When the standard inspection mode is selected, a radiation ray with a higher dose and/or energy may be used to perform radiation scanning inspection at the horizontal viewing angle on the vehicle to be inspected, so as to improve the inspection accuracy of the vehicle to be inspected; and selecting the rapid inspection mode is conducive to improving the passing rate of the vehicle to be inspected. Moreover, the radiation inspection system can achieve radiation scanning inspection from both horizontal and vertical viewing angles in the two inspection modes, thus further improving the inspection accuracy of the vehicular cargo on the vehicle to be inspected.

Based on the radiation inspection method disclosed by the present disclosure, the radiation inspection system can be effectively used to select different inspection modes for different vehicles under inspection, and meet the requirements on the vehicle passing rate, the inspection accuracy and the like. Other features and advantages of the present disclosure will become apparent from the following detailed description of exemplary embodiments of the present disclosure with reference to the accompanying drawings.

### BRIEF DESCRIPTION OF THE DRAWINGS

The drawings described here are used to provide a further understanding of the present disclosure and form a part of the present application. The illustrative embodiments of the present disclosure and description thereof are used for explaining rather than unduly limiting the present disclosure. In the drawings:
Fig. 1 is a structure diagram of a radiation inspection system in some embodiments of the present disclosure when a vehicle to be inspected passes through a first inspection channel of fixed support equipment;
Fig. 2 is a structure diagram of a radiation inspection system in some embodiments of the present disclosure when a vehicle to be inspected passes through a second inspection channel of movable support equipment;
Fig. 3 is a structure diagram of a radiation inspection system in some embodiments of the present disclosure when a vehicle to be inspected is inspected in a rapid inspection mode; and
Fig. 4 is a structure diagram of a radiation inspection system in some embodiments of the present disclosure when a vehicle to be inspected is inspected in a standard inspection mode.

### DETAILED DESCRIPTION OF THE EMBODIMENTS

The technical solutions in the embodiments of the present disclosure will be described clearly and completely below in conjunction with the accompanying drawings in the embodiments of the present disclosure. Obviously, the described embodiments are only a part of the embodiments of the present disclosure, and not all the embodiments. The following description of at least one exemplary embodiment is actually merely illustrative, and in no way serves as any limitation to the present disclosure and its application or use.

Unless specifically stated otherwise, the relative arrangement of components and steps, numerical expressions and numerical values set forth in these embodiments do not limit the scope of the present disclosure. Furthermore, it should be understood that, for ease of description, the sizes of various parts shown in the drawings are not drawn in accordance with actual proportional relationships. Technologies, methods, and devices known to those of ordinary skill in the related art may be not discussed in detail. In all examples shown and discussed here, any specific value should be interpreted as merely exemplary, rather than as a limitation. Therefore, other examples of an exemplary embodiment may have different values. It should be noted that similar reference numerals and letters denote similar items in the following drawings, so once a certain item is defined in one drawing, it does not need to be further discussed in subsequent drawings.

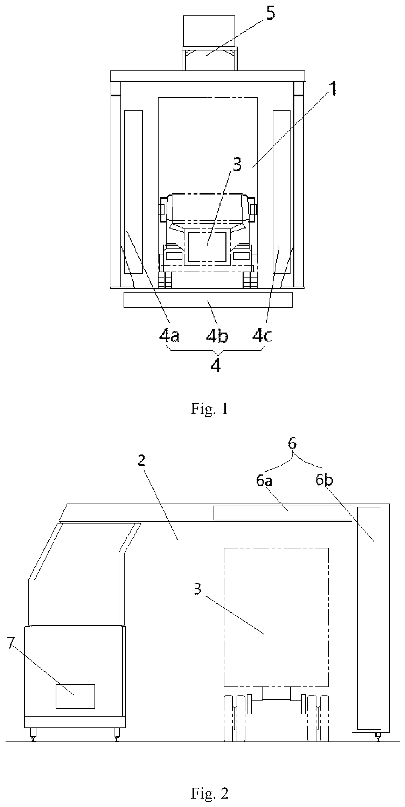

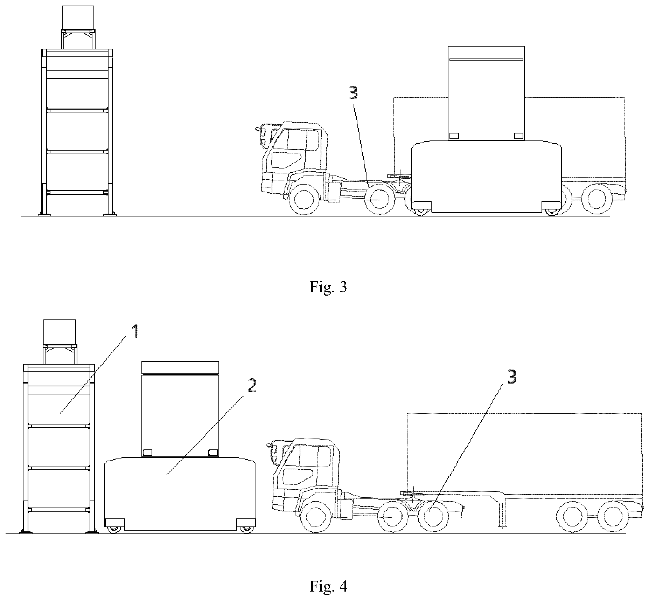

As shown in Figs. 1 and 4, a radiation inspection system of an embodiment has a standard inspection mode and a rapid inspection mode, and includes a stationary inspection equipment and a movable inspection equipment.

The stationary inspection equipment has a first inspection channel 1 for a vehicle to be inspected 3 to pass through, the stationary inspection equipment includes a vertical viewing angle inspection device for radiation inspection on a top side or a bottom side of the vehicle to be inspected 3. In the standard inspection mode, the vertical viewing angle inspection device outputs a first radiation scanning ray to inspect the vehicle to be inspected 3 traveling through the first inspection channel 1; and in the rapid inspection mode, the vertical viewing angle inspection device outputs a second radiation scanning ray to inspect the vehicle to be inspected 3 traveling through the first inspection channel 1.

The movable inspection equipment is arranged movably relative to the stationary inspection equipment. The movable inspection equipment has a second inspection channel 2 for the vehicle to be inspected 3 to pass through. The movable inspection equipment includes a horizontal viewing angle inspection device for scanning inspection on sides of the vehicle to be inspected 3. In the standard inspection mode, the movable inspection equipment moves along a length direction of the vehicle to be inspected 3, and the horizontal viewing angle inspection device outputs a third radiation scanning ray to inspect the vehicle to be inspected 3 passing through the second inspection channel 2. In the rapid inspection mode, the movable inspection equipment is fixed, and the horizontal viewing angle inspection device outputs a fourth radiation scanning ray to inspect the vehicle to be inspected 3 passing through the second inspection channel 2. The output energy of the third radiation scanning ray is higher than that of the fourth radiation scanning ray, and/or the dose of the third radiation scanning ray is higher than that of the fourth radiation scanning ray.

The radiation inspection system can select different inspection modes for different vehicles while ensuring the safety of the radiation dose for a person. When the standard inspection mode is selected, a radiation ray with a higher dose and/or energy may be used to perform radiation scanning inspection at the horizontal viewing angle on the vehicle to be inspected, so as to improve the inspection accuracy of the vehicle to be inspected. Selecting the rapid inspection mode is conducive to improving the passing rate of the vehicle to be inspected. Moreover, the radiation inspection system can achieve radiation scanning inspection from both horizontal and vertical viewing angles in the two inspection modes, thus further improving the inspection accuracy of the vehicular cargo on the vehicle to be inspected.

As shown in Fig. 1, in the embodiment, the vertical viewing angle inspection device includes a first ray source 5 above the first inspection channel 1 and a first detection device 4 below the first ray source 5.

The first ray source 5 emits downward a radiation ray such as X ray or γ ray, for scanning inspection on the vehicle to be inspected 3 traveling through the first inspection channel 1.

The first detection device 4 is used to receive the radiation ray emitted by the ray source 5. After being received by the first detection device 4, the radiation ray passing through the vehicle to be inspected 3 is converted into a digital signal, which is then processed on a digital processing and imaging device such as a computer to form a transmission scan image.

As shown in Fig. 1, in the embodiment, the first detection device 4 includes a first detection unit 4a on a left side of the first inspection channel 1, a second detection unit 4b below the first inspection channel 1, and a third detection unit 4c on a right side of the first inspection channel 1. The first detection unit 4a, the second detection unit 4b and the third detection unit 4c are respectively used for receiving radiation rays at different angles emitted downward by the first ray source 5.

In some embodiments, the first ray source may be located below the first inspection channel, and the first detection device may include a first detection unit on the left side of the first inspection channel, a second detection unit above the first inspection channel, and a third detection unit on the right side of the first inspection channel.

The output energy and/or dose of the first radiation scanning ray output by the vertical viewing angle inspection device in the standard inspection mode may be same as or different from that of the second radiation scanning ray output by the vertical viewing angle inspection device in the rapid inspection mode.

The movable inspection equipment may be arranged movably upstream or downstream of the stationary inspection equipment in a moving direction of the vehicle to be inspected 3. In the embodiment, as shown in Fig. 3 or 4, the movable inspection equipment is arranged upstream of the stationary inspection equipment. The movable inspection equipment may move on the ground or on rails by means of wheel sets mounted at the bottom.

As shown in Fig. 2, the horizontal viewing angle inspection device includes a second ray source 7 on a side of the second inspection channel 2, and a second detection device 6 for receiving a radiation ray emitted by the second ray source 7. The second detection device 6 includes a fourth detection unit 6a above the second inspection channel 2, and a fifth detection unit 6b on the other side of the second inspection channel 2 opposite to the second ray source 7.

In some embodiments, the output energy of the third radiation scanning ray is higher than that of the first radiation scanning ray and the second radiation scanning ray; and/or the output dose of the third radiation scanning ray is higher than that of the first radiation scanning ray and the second radiation scanning ray.

In the radiation inspection system of the embodiment, different inspection modes may be selected for different vehicles while ensuring the safety of the radiation dose for a person.

For a vehicle to be inspected 3 loaded with a heavy-load cargo that is not easy to penetrate by a radiation ray, the standard inspection mode may be selected to improve the inspection accuracy of the vehicle to be inspected 3.

In the standard inspection mode, a driver first drives the vehicle to be inspected 3 loaded with the heavy-load cargo into an inspection area of the radiation inspection system, and the driver parks the vehicle and leaves after the vehicle to be inspected 3 arrives at the inspection area of the radiation inspection system. After confirming that the driver has left the inspection area of the radiation inspection system, the movable inspection equipment is started to perform radiation scanning on the vehicle to be inspected 3. The horizontal viewing angle inspection device moves with the movable inspection equipment along a length direction of the vehicle to be inspected 3, and from one end to the other end of the vehicle to be inspected 3 (from head to tail or from tail to head). In this process, the second ray source 7 of the horizontal viewing angle inspection device emits the third radiation scanning ray to scan the vehicular cargo of the vehicle to be inspected 3, and the second detection device 6 receives the radiation ray penetrating the vehicular cargo, and a scan image at a horizontal viewing angle is formed on an imaging device. After the scanning is completed, the driver drives away the vehicle to be inspected 3, which passes through the first inspection channel 1 of the stationary inspection equipment during traveling, and after the vehicle to be inspected 3 enters the first inspection channel 1, the vertical viewing angle inspection device of the stationary inspection equipment performs scanning imaging at a vertical viewing angle by emitting the first radiation scanning ray.

In some embodiments, the movable inspection equipment may be located downstream of the stationary inspection equipment. In this case, the driver first drives the vehicle through the first inspection channel, and after radiation scanning imaging at the vertical viewing angle of the stationary inspection equipment is completed, radiation scanning imaging at the horizontal viewing angle is performed.

For a vehicle to be inspected 3 loaded with a light-load cargo that is relatively easy to penetrate by a radiation ray, the rapid inspection mode may be selected. A radiation ray with a lower dose is used to perform radiation scanning inspection at a horizontal viewing angle on the vehicle to be inspected 3, so as to improve the inspection speed of the vehicle to be inspected 3.

In the rapid inspection mode, the movable inspection equipment and the horizontal viewing angle inspection device thereof are stationary, and the driver directly drives the vehicle to be inspected 3 through the second inspection channel 2 of the movable inspection equipment and the first inspection channel 1 of the stationary inspection equipment successively. When the second inspection channel 2 is passed through, the horizontal viewing angle inspection device emits the fourth radiation scanning ray to perform scanning inspection on the vehicle to be inspected 3. When the first inspection channel 1 is passed through, the vertical viewing angle inspection device emits the second radiation scanning ray to perform scanning inspection on the vehicle to be inspected 3.

In the radiation inspection system of the embodiment, different inspection modes may be selected for the vehicle to be inspected 3 for different vehicular cargo types. It can achieve that when the cargo is difficult to inspect, a radiation ray of a high dose and/or high energy is used to perform scanning inspection so as to improve the inspection accuracy. When the cargo is easy to inspect, a radiation ray of a low dose and/or low energy is used to perform scanning inspection so as to increase the passing efficiency of the vehicle, and reduce the inspection time, thus taking into account both the efficiency and the inspection accuracy. In the two modes, scan images at both horizontal and vertical viewing angles are provided, which is conducive to improving the inspection accuracy.

In some embodiments, the radiation inspection system further includes a vehicular cargo determination device for determining whether a vehicular cargo on the vehicle to be inspected is a light-load cargo or a heavy-load cargo. When the vehicular cargo determination device determines that the vehicular cargo is a heavy-load cargo, the radiation inspection system switches to the standard inspection mode. When the vehicular cargo determination device determines that the vehicular cargo is a light-load cargo, the radiation inspection system switches to the rapid inspection mode. The vehicular cargo determination device can automatically determine that the vehicular cargo is a light-load cargo or a heavy-load cargo according to information of the vehicle to be inspected 3, and then the radiation inspection system switches to a corresponding inspection mode according to a determination result.

In some embodiments, the vehicular cargo determination device includes a determination processor. After information of the vehicle to be inspected 3 such as the category, specification, quantity and weight of the vehicular cargo is input to the processor, the processor automatically analyzes it and determines that the vehicular cargo on the vehicle to be inspected 3 is a light-load cargo or a heavy-load cargo, and then the radiation inspection system switches to a corresponding inspection mode according to a determination result.

In some embodiments, the vehicular cargo determination device includes a weighing device for weighing the vehicle to be inspected 3, and determines whether the vehicular cargo on the vehicle to be inspected is a light-load cargo or a heavy-load cargo according to a weighing result from the weighing device. For example, the vehicular cargo determination device includes a determination processor and a weighing device connected thereto. The weighing device, such as a truck scale, weighs the vehicle to be inspected 3 and then inputs weighing information to the determination processor, and the determination processor determines whether the vehicular cargo is a light-load cargo or heavy-load cargo according to the weighing information.

In some embodiments, the radiation inspection system further includes a control device, which is in signal connection with the vehicular cargo determination device, the stationary inspection equipment and the movable inspection equipment. The control device receives a determination result that the vehicular cargo is a light-load cargo or a heavy-load cargo as determined by the vehicular cargo determination device, and operates and controls the stationary inspection equipment and the movable inspection equipment according to the determination result, so that the radiation inspection system automatically switches between the standard inspection mode and the rapid inspection mode.

The control device includes signal input and output ports, and a central processing unit for processing signals and issuing commands. In some embodiments, the control device further includes a computer display screen and a GUI, to facilitate a working person tracking and handling a working process of the radiation inspection system.

The control device may be any of various devices capable of achieving the above control function, including but not limited to a computer, a general-purpose processor, a programmable logic controller (PLC), an application-specific integrated circuit (ASIC) or a field programmable gate array (FPGA).

In some embodiments, the radiation inspection system further includes a first detection unit for detecting whether the vehicle to be inspected 3 enters the inspection area of the radiation inspection system.

The first detection unit may include a through-beam photoelectric sensor with a light emitter and a light receiver. The light emitter and receiver are placed on two sides of a front end of the inspection area. When the vehicle to be inspected 3 enters the inspection area of the radiation inspection system, light emitted by the light emitter is blocked by the vehicle to be inspected 3, which affects the reception by the light receiver, thereby generating a signal indicating that the vehicle to be inspected 3 enters the inspection area. The first detection unit may also include a ground induction coil arranged in front of the inspection area, and when the vehicle to be inspected 3 passes through the ground induction coil, a ground induction signal is generated to determine that the vehicle to be inspected 3 enters the inspection area. Providing the first detection unit assists in determining whether the vehicle to be inspected 3 enters the inspection area of the radiation inspection system, so that the radiation inspection system gets ready for radiation scanning inspection.

In some embodiments, the radiation inspection system further includes a second detection unit. The second detection unit is coupled with the vertical viewing angle inspection device, and detects that a part of the vehicle to be inspected 3 that needs radiation protection passes the vertical viewing angle inspection device and generates a first passing signal. After the vertical viewing angle inspection device receives the first passing signal, the first ray source 5 is triggered to output the first radiation scanning ray in the standard inspection mode or output the second radiation scanning ray in the rapid inspection mode.

The second detection unit may include a speed sensor and a through-beam photoelectric sensor with a light emitter and a light receiver, or include a speed sensor and a ground induction coil. The through-beam photoelectric sensor or ground induction coil is provided in front of the vertical inspection device to generate an entering signal of the vehicle to be inspected, and then the speed sensor is used to measure the speed of the vehicle to be inspected 3; the time for the part of the vehicle to be inspected 3 that needs protection to pass the vertical viewing angle device is calculated by using the entering signal and the measured speed; and the first passing signal is generated after the time is up.

In some embodiments, the radiation inspection system further includes a third detection unit. The third detection unit is coupled with the horizontal viewing angle inspection device, and detects that the part of the vehicle to be inspected 3 that needs radiation protection passes the horizontal viewing angle inspection device and generates a second passing signal. After the horizontal viewing angle inspection device receives the second passing signal, the second ray source 7 is triggered to output the third radiation scanning ray in the standard inspection mode or output the fourth radiation scanning ray in the rapid inspection mode.

The function and structure of the third detection unit are similar to those of the above-mentioned second detection unit. The difference is that in the standard inspection mode, the speed sensor measures a moving speed of the horizontal viewing angle inspection device, and then the time for the part of the vehicle to be inspected 3 that needs radiation protection to pass is calculated according to the speed, and the second pass signal is generated.

In some embodiments, whether the vehicular cargo is heavy-load cargo or a light-load cargo may also be determined by a person. In some embodiments, after the vehicular cargo determination device determines whether the vehicular cargo is a light-load cargo or a heavy-load cargo, the stationary inspection equipment and the movable inspection equipment may also be adjusted and set manually to switch the inspection mode.

An embodiment of the present disclosure further provides a radiation inspection method for inspecting a vehicle to be inspected 3 by using the radiation inspection system described above, the method including: selecting one inspection mode from the standard inspection mode and the rapid inspection mode according to the character of the vehicular cargo on the vehicle to be inspected 3; and inspecting the vehicle to be inspected 3 in the selected inspection mode.

In some embodiments, selecting one inspection mode from the standard inspection mode and the rapid inspection mode according to the character of the vehicular cargo on the vehicle to be inspected 3 includes determining the vehicular cargo on the vehicle to be inspected 3 to be a light-load cargo or a heavy-load cargo according to the character of the vehicular cargo, wherein when the vehicular cargo is determined to be a heavy-load cargo, the standard inspection mode is selected; and when the vehicular cargo is determined to be a light-load cargo, the rapid inspection mode is selected.

The character of the vehicular cargo includes at least one of cargo category, cargo quantity, cargo weight, cargo density, cargo structure and cargo loading method. In some embodiments, the information of the above-mentioned vehicular cargo may be obtained by automatically or manually entering the license plate number or the container number of the vehicular cargo to retrieve bill information of the customs declaration or manifest. In some embodiments, after relevant information about the character of the vehicular cargo is obtained, whether the vehicular cargo is a light-load cargo or a heavy-load cargo may be determined based on historical data and image training. In some embodiments, a classification criterion of a light-load cargo and a heavy-load cargo may be adjusted to dynamically adjust the proportions of the two inspection modes, i.e. the rapid inspection mode and the standard inspection mode.

In some embodiments, when the vehicle to be inspected 3 is inspected in the standard inspection mode, the method includes: after the part of the vehicle to be inspected 3 that needs radiation protection has passed the vertical viewing angle inspection device, the vertical viewing angle inspection device starts outputting the first radiation scanning ray; and/or after the vehicle to be inspected 3 is parked, the horizontal viewing angle inspection device outputs the third radiation scanning ray. In some embodiments, when the vehicle to be inspected 3 is inspected in the rapid inspection mode, the method includes: after the part of the vehicle to be inspected 3 that needs radiation protection has passed the vertical viewing angle inspection device, the vertical viewing angle inspection device outputs the second radiation scanning ray; and/or after the part of the vehicle to be inspected 3 that needs radiation protection has passed the horizontal viewing angle inspection device, the horizontal viewing angle inspection device outputs the fourth radiation scanning ray. The radiation inspection methods in the standard inspection mode and in the rapid inspection mode in the above embodiments are conducive to further strengthening the radiation protection of the part that needs radiation protection.

Finally, it should be noted that the above embodiments are only used for describing rather than limiting the technical solutions of the present disclosure. Although the present disclosure is described in detail with reference to the preferred embodiments, those of ordinary skill in the art should understand that they still can make modifications to the specific implementations in the present disclosure and such modifications should be encompassed within the technical solutions sought for protection in the present disclosure so long as they do not depart from the scope of the invention, which is defined by the appended claims.

## Claims

1. A radiation inspection system, comprising:
a movable inspection equipment, which is arranged movably relative to a stationary inspection equipment and has a second inspection channel for the vehicle to be inspected to pass through, wherein the movable inspection equipment comprises a horizontal viewing angle inspection device for scanning inspection on sides of the vehicle to be inspected;
a stationary inspection equipment, which has a first inspection channel for a vehicle to be inspected to pass through and comprises a vertical viewing angle inspection device for radiation inspection on a top side or a bottom side of the vehicle to be inspected;
the radiation inspection system has a standard inspection mode and a rapid inspection mode, and comprises a control device configured to switch the inspection system between said standard and rapid inspection modes;
in the standard inspection mode, the vertical viewing angle inspection device outputs a first radiation scanning ray to inspect the vehicle to be inspected travelling through the first inspection channel, the movable inspection equipment moves along a length direction of the vehicle to be inspected, and the horizontal viewing angle inspection device outputs a third radiation scanning ray to inspect the vehicle to be inspected passing through the second inspection channel;
in the rapid inspection mode, the vertical viewing angle inspection device outputs a second radiation scanning ray to inspect the vehicle to be inspected travelling through the first inspection channel, the movable inspection equipment is fixed, and the horizontal viewing angle inspection device outputs a fourth radiation scanning ray to inspect the vehicle to be inspected passing through the second inspection channel; and
the output energy of the third radiation scanning ray is higher than that of the fourth radiation scanning ray, and/or the dose of the third radiation scanning ray is higher than that of the fourth radiation scanning ray.

2. The radiation inspection system according to claim 1, further comprising a vehicular cargo determination device for determining whether a vehicular cargo on the vehicle to be inspected (3) is a light-load cargo or a heavy-load cargo, wherein
when the vehicular cargo determination device determines that the vehicular cargo is a heavy-load cargo, the radiation inspection system switches to the standard inspection mode; and
when the vehicular cargo determination device determines that the vehicular cargo is a light-load cargo, the radiation inspection system switches to the rapid inspection mode.

3. The radiation inspection system according to claim 2, wherein said control device is in signal connection with the vehicular cargo determination device, the stationary inspection equipment and the movable inspection equipment, the control device configured to receive a determination result that the vehicular cargo is a light-load cargo or a heavy-load cargo as determined by the vehicular cargo determination device, and manipulate the stationary inspection equipment and the movable inspection equipment according to the determination result, so that the radiation inspection system automatically switches between the standard inspection mode and the rapid inspection mode.

4. The radiation inspection system according to claim 2 or 3, wherein the vehicular cargo determination device comprises a weighing device for weighing the vehicle to be inspected (3), and determines whether the vehicular cargo on the vehicle to be inspected (3) is a light-load cargo or a heavy-load cargo according to a weighing result from the weighing device.

5. The radiation inspection system according to any one of claims 1 to 4, wherein
the output energy of the third radiation scanning ray is higher than that of the first radiation scanning ray and the second radiation scanning ray, and/or
the output dose of the third radiation scanning ray is higher than that of the first radiation scanning ray and the second radiation scanning ray.

6. The radiation inspection system according to any one of claims 1 to 5, further comprising:
a first detection unit, which detects whether the vehicle to be inspected (3) enters an inspection area of the radiation inspection system; and/or
a second inspection unit, which is coupled with the vertical viewing angle inspection device, and detects that a part of the vehicle to be inspected (3) that needs radiation protection passes the vertical viewing angle inspection device and generates a first passing signal, the vertical viewing angle inspection device configured to output the first radiation scanning ray or the second radiation scanning ray after receiving the first passing signal; and/or
a third detection unit, which is coupled with the horizontal viewing angle inspection device, and detects that the part of the vehicle to be inspected (3) that needs radiation protection passes the horizontal viewing angle inspection device and generates a second passing signal, the horizontal viewing angle inspection device configured to output the third radiation scanning ray or the fourth radiation scanning ray after receiving the second passing signal.

7. A radiation inspection method for inspecting a vehicle to be inspected (3) by using the radiation inspection system of any one of claims 1 to 6, **characterized by** comprising:
selecting one of the standard inspection mode and the rapid inspection mode according to the character of the vehicular cargo on the vehicle to be inspected (3); and
inspecting the vehicle to be inspected (3) in the selected inspection mode.

8. The radiation inspection method according to claim 7, wherein selecting one of the standard inspection mode and the rapid inspection mode according to the character of the vehicular cargo on the vehicle to be inspected (3) comprises determining the vehicular cargo on the vehicle to be inspected (3) to be a light-load cargo or a heavy-load cargo according to the character of the vehicular cargo, wherein
when the vehicular cargo is determined to be a heavy-load cargo, the standard inspection mode is selected; and
when the vehicular cargo is determined to be a light-load cargo, the rapid inspection mode is selected.

9. The radiation inspection method according to claim 7 or 8, wherein the character of the vehicular cargo comprises at least one of cargo category, cargo quantity, cargo weight, cargo density, cargo structure or cargo loading method.

10. The radiation inspection method according to any one of claims 7 to 9, wherein when the vehicle to be inspected (3) is inspected in the standard inspection mode, the method comprises:
after the part of the vehicle to be inspected (3) that needs radiation protection has passed the vertical viewing angle inspection device, the vertical viewing angle inspection device outputs the first radiation scanning ray; and/or
after the vehicle to be inspected (3) is parked, the horizontal viewing angle inspection device outputs the third radiation scanning ray.

11. The radiation inspection method according to any one of claims 7 to 10, wherein when the vehicle to be inspected (3) is inspected in the rapid inspection mode, the method comprises:
after the part of the vehicle to be inspected (3) that needs radiation protection has passed the vertical viewing angle inspection device, the vertical viewing angle inspection device outputs the second radiation scanning ray; and/or
after the part of the vehicle to be inspected (3) that needs radiation protection has passed the horizontal viewing angle inspection device, the horizontal viewing angle inspection device outputs the fourth radiation scanning ray.

## Patentansprüche

1. Strahlungsinspektionssystem, umfassend:
eine bewegliche Inspektionsvorrichtung, die relativ zu einer stationären Inspektionsvorrichtung beweglich angeordnet ist und einen zweiten Inspektionskanal für den Durchgang des zu inspizierenden Fahrzeugs aufweist, wobei die bewegliche Inspektionsvorrichtung eine horizontale Sichtwinkelinspektionsvorrichtung zur Abtastinspektion an Seiten des zu inspizierenden Fahrzeugs aufweist;
eine stationäre Inspektionsvorrichtung, die einen ersten Inspektionskanal für den Durchgang eines zu inspizierenden Fahrzeugs aufweist und eine Inspektionsvorrichtung mit vertikalem Betrachtungswinkel für die Strahlungsinspektion auf einer Oberseite oder einer Unterseite des zu inspizierenden Fahrzeugs umfasst;
wobei das Strahlungsinspektionssystem einen Standardinspektionsmodus und einen Schnellinspektionsmodus hat und eine Steuervorrichtung umfasst, die konfiguriert ist, um das Inspektionssystem zwischen dem Standard- und dem Schnellinspektionsmodus umzuschalten;
wobei im Standardinspektionsmodus die vertikale Sichtwinkelinspektionsvorrichtung einen ersten Strahlungsinspektionsstrahl ausgibt, um das zu inspizierende Fahrzeug zu inspizieren, das sich durch den ersten Inspektionskanal bewegt, wobei sich die bewegliche Inspektionsausrüstung entlang einer Längsrichtung des zu inspizierenden Fahrzeugs bewegt, und die horizontale Sichtwinkelinspektionsvorrichtung einen dritten
Strahlungsinspektionsstrahl ausgibt, um das zu inspizierende Fahrzeug zu inspizieren, das sich durch den zweiten Inspektionskanal bewegt;
wobei im Schnellinspektionsmodus die Inspektionsvorrichtung mit vertikalem Betrachtungswinkel einen zweiten Strahlungsinspektionsstrahl ausgibt, um das zu inspizierende Fahrzeug zu inspizieren, das sich durch den ersten Inspektionskanal bewegt, wobei die bewegliche Inspektionsvorrichtung fixiert ist, und die Inspektionsvorrichtung mit horizontalem Betrachtungswinkel einen vierten Strahlungsinspektionsstrahl ausgibt, um das zu inspizierende Fahrzeug zu inspizieren, das den zweiten Inspektionskanal durchläuft; und wobei die Ausgangsenergie des dritten Strahlungsinspektionsstrahls höher ist als die des vierten Strahlungsinspektionsstrahls, und/oder die Dosis des dritten
Strahlungsinspektionsstrahls höher ist als die des vierten Strahlungsinspektionsstrahls.

2. Strahlungsinspektionssystem nach Anspruch 1, das zusätzlich eine Fahrzeugladungsbestimmungsvorrichtung umfasst, um zu bestimmen, ob eine Fahrzeugladung auf dem zu inspizierenden Fahrzeug (3) eine Leichtladungsladung oder eine Schwerladungsladung ist, wobei das Strahlungsinspektionssystem in den Standardinspektionsmodus umschaltet, wenn die Fahrzeugladungsbestimmungsvorrichtung bestimmt, dass die Fahrzeugladung eine Schwerladungsladung ist; und das Strahlungsinspektionssystem in den Schnellinspektionsmodus umschaltet, wenn die Fahrzeugladungsbestimmungsvorrichtung bestimmt, dass die Fahrzeugladung eine Leichtladungsladung ist.

3. Strahlungsinspektionssystem nach Anspruch 2, wobei die Steuervorrichtung in Signalverbindung mit der Fahrzeugladungsbestimmungsvorrichtung, der stationären Inspektionsausrüstung und der beweglichen Inspektionsausrüstung steht, wobei die Steuervorrichtung so konfiguriert ist, dass sie ein Bestimmungsergebnis empfängt, dass die Fahrzeugladung eine Leichtladungsladung oder eine Schwerladungsladung ist, wie von der Fahrzeugladungsbestimmungsvorrichtung bestimmt, und die stationäre Inspektionsausrüstung und die bewegliche Inspektionsausrüstung entsprechend dem Bestimmungsergebnis manipuliert, so dass das Strahlungsinspektionssystem automatisch zwischen dem Standardinspektionsmodus und dem Schnellinspektionsmodus umschaltet.

4. Strahlungsinspektionssystem nach Anspruch 2 oder 3, wobei die Fahrzeugladungsbestimmungsvorrichtung eine Wiegevorrichtung zum Wiegen des zu inspizierenden Fahrzeugs (3) umfasst und gemäß einem Wiegeergebnis der Wiegevorrichtung bestimmt, ob die Fahrzeugladung auf dem zu inspizierenden Fahrzeug (3) eine Leichtladungsladung oder eine Schwerladungsladung ist.

5. Strahlungsinspektionssystem nach einem der Ansprüche 1 bis 4, wobei die Ausgangsenergie des dritten Strahlungsinspektionsstrahls höher ist als die des ersten Strahlungsinspektionsstrahls und des zweiten Strahlungsinspektionsstrahls, und/oder die Ausgangsenergie des dritten Strahlungsinspektionsstrahls höher ist als die des ersten Strahlungsinspektionsstrahls und des zweiten Strahlungsinspektionsstrahls.

6. Strahlungsinspektionssystem nach einem der Ansprüche 1 bis 5, ferner umfassend: eine erste Detektionseinheit, die erkennt, ob das zu inspizierende Fahrzeug (3) in einen Inspektionsbereich des Strahlungsinspektionssystems einfährt; und/oder eine zweite Inspektionseinheit, die mit der Vertikalblickwinkel-Inspektionsvorrichtung gekoppelt ist und detektiert, dass ein Teil des zu inspizierenden Fahrzeugs (3), das einen Strahlenschutz benötigt, die Vertikalblickwinkel-Inspektionsvorrichtung passiert und ein erstes Passiersignal erzeugt, wobei die Vertikalblickwinkel-Inspektionsvorrichtung so konfiguriert ist, dass sie den ersten Strahleninspektionsstrahl oder den zweiten Strahleninspektionsstrahl nach Empfang des ersten Passiersignals ausgibt; und/oder eine dritte Detektionseinheit, die mit der horizontalen Sichtwinkelinspektionsvorrichtung gekoppelt ist und erfasst, dass der zu inspizierende Teil des Fahrzeugs (3), der Strahlenschutz benötigt, die horizontale Sichtwinkelinspektionsvorrichtung passiert und ein zweites Durchgangssignal erzeugt, wobei die horizontale Sichtwinkelinspektionsvorrichtung so konfiguriert ist, dass sie den dritten Strahlungsinspektionsstrahl oder den vierten Strahlungsinspektionsstrahl nach dem Empfang des zweiten Durchgangssignals ausgibt.

7. Strahlungsinspektionsverfahren zur Inspektion eines zu inspizierenden Fahrzeugs (3) unter Verwendung des Strahlungsinspektionssystems nach einem der Ansprüche 1 bis 6, **dadurch gekennzeichnet, dass** es:
Auswählen des Standardinspektionsmodus oder des Schnellinspektionsmodus entsprechend der Beschaffenheit der Fahrzeugladung auf dem zu inspizierenden Fahrzeug (3); und Inspizieren des zu inspizierenden Fahrzeugs (3) in dem ausgewählten Inspektionsmodus, umfasst.

8. Strahlungsinspektionsverfahren nach Anspruch 7, wobei das Auswählen des Standardinspektionsmodus oder des Schnellinspektionsmodus entsprechend der Beschaffenheit der Fahrzeugladung auf dem zu inspizierenden Fahrzeug (3) das Bestimmen der Fahrzeugladung auf dem zu inspizierenden Fahrzeug (3) als Leichtladungsladung oder Schwerladungsladung entsprechend der Beschaffenheit der Fahrzeugladung umfasst, wobei, wenn die Fahrzeugladung als Schwerladungsladung t bestimmt wird, der Standardinspektionsmodus ausgewählt wird; und wenn die Fahrzeugladung als Leichtladungsladung bestimmt wird, der Schnellinspektionsmodus ausgewählt wird.

9. Strahlungsinspektionsverfahren nach Anspruch 7 oder 8, wobei das Merkmal der Fahrzeugladung mindestens eines der folgenden Merkmale umfasst: Ladungskategorie, Ladungsmenge, Ladungsgewicht, Ladungsdichte, Ladungsstruktur oder Ladungsladeverfahren.

10. Strahlungsinspektionsverfahren nach einem der Ansprüche 7 bis 9, wobei, wenn das zu inspizierende Fahrzeug (3) im Standardinspektionsmodus inspiziert wird, das Verfahren Folgendes umfasst:
nachdem der Teil des zu inspizierenden Fahrzeugs (3), der einen Strahlenschutz benötigt, die vertikale Sichtwinkelinspektionsvorrichtung passiert hat, die vertikale Sichtwinkelinspektionsvorrichtung den ersten Strahleninspektionsstrahl ausgibt; und/oder nach dem Abstellen des zu inspizierenden Fahrzeugs (3) die horizontale Sichtwinkelinspektionsvorrichtung den dritten Strahleninspektionsstrahl abgibt.

11. Strahlungsinspektionsverfahren nach einem der Ansprüche 7 bis 10, wobei das Verfahren, wenn das zu inspizierende Fahrzeug (3) im Schnellinspektionsmodus inspiziert wird, Folgendes umfasst:
nachdem der zu inspizierende Teil des Fahrzeugs (3), der Strahlenschutz benötigt, die vertikale Sichtwinkelinspektionsvorrichtung passiert hat, die vertikale Sichtwinkelinspektionsvorrichtung den zweiten Strahleninspektionsstrahl ausgibt; und/oder nachdem der zu inspizierende Teil des Fahrzeugs (3), der Strahlenschutz benötigt, die horizontale Sichtwinkelinspektionsvorrichtung passiert hat, die horizontale Sichtwinkelinspektionsvorrichtung den vierten Strahleninspektionsstrahl ausgibt.

## Revendications

1. Système d'inspection par rayonnement, comprenant :
un équipement d'inspection mobile qui est agencé de manière mobile relativement à un équipement d'inspection stationnaire et qui a un second canal d'inspection permettant au véhicule devant être inspecté de passer à l'intérieur, l'équipement d'inspection mobile comprenant un dispositif d'inspection d'angle de vue horizontal destiné à une inspection par balayage sur des côtés du véhicule devant être inspecté ;
un équipement d'inspection stationnaire qui a un premier canal d'inspection permettant à un véhicule devant être inspecté de passer à l'intérieur et qui comprend un dispositif d'inspection d'angle de vue vertical destiné à une inspection par rayonnement sur un côté de dessus ou un côté de dessous du véhicule devant être inspecté ;
le système d'inspection par rayonnement a un mode d'inspection standard et un mode d'inspection rapide, et comprend un dispositif de commande configuré pour basculer le système d'inspection entre lesdits modes d'inspection standard et rapide ;
dans le mode d'inspection standard, le dispositif d'inspection d'angle de vue vertical sort un premier rayon de balayage par rayonnement pour inspecter le véhicule devant être inspecté qui circule à travers le premier canal inspection, l'équipement d'inspection mobile se déplace long d'une direction de la longueur du véhicule devant être inspecté, et le dispositif d'inspection d'angle de vue horizontal sort un troisième rayon de balayage par rayonnement pour inspecter le véhicule devant être inspecté qui passe à travers le second canal d'inspection ;
dans le mode d'inspection rapide, le dispositif d'inspection d'angle de vue vertical sort un deuxième rayon de balayage par rayonnement pour inspecter le véhicule devant être inspecté qui circule à travers le premier canal inspection, l'équipement d'inspection mobile est fixe, et le dispositif d'inspection d'angle de vue horizontal sort un quatrième rayon de balayage par rayonnement pour inspecter le véhicule devant être inspecté qui passe à travers le second canal inspection ; et
l'énergie de sortie du troisième rayon de balayage par rayonnement est plus élevée que celle du quatrième rayon de balayage par rayonnement, et/ou la dose du troisième rayon de balayage par rayonnement est plus élevée que celle du quatrième rayon de balayage par rayonnement.

2. Système d'inspection par rayonnement selon la revendication 1, comprenant en outre un dispositif de détermination de chargement de véhicule destiné à déterminer si un chargement de véhicule sur le véhicule devant être inspecté (3) est un chargement à charge légère ou un chargement à charge lourde, dans lequel
quand le dispositif de détermination de chargement de véhicule détermine que le chargement de véhicule est un chargement à charge lourde, le système d'inspection par rayonnement bascule au mode d'inspection standard ; et quand le dispositif de détermination de chargement de véhicule détermine que le chargement de véhicule est un chargement à charge légère, le système d'inspection par rayonnement bascule au mode d'inspection rapide.

3. Système d'inspection par rayonnement selon la revendication 2, dans lequel ledit dispositif de commande est dans une connexion par signaux avec le dispositif de détermination de chargement de véhicule, l'équipement d'inspection stationnaire et l'équipement d'inspection mobile, le dispositif de commande étant configuré pour recevoir un résultat de détermination selon lequel le chargement de véhicule est un chargement à charge légère ou un chargement à charge lourde comme déterminé par le dispositif de détermination de chargement de véhicule, et pour manipuler l'équipement d'inspection stationnaire et l'équipement d'inspection mobile en accord avec le résultat de détermination, de telle sorte que le système d'inspection par rayonnement bascule automatiquement entre le mode d'inspection standard et le mode d'inspection rapide.

4. Système d'inspection par rayonnement selon la revendication 2 ou 3, dans lequel le dispositif de détermination de chargement de véhicule comprend un dispositif de pesage destiné à peser le véhicule devant être inspecté (3), et détermine si le chargement de véhicule sur le véhicule devant être inspecté (3) est un chargement à charge légère ou un chargement à charge lourde en accord avec un résultat de pesage provenant du dispositif de pesage.

5. Système d'inspection par rayonnement selon l'une quelconque des revendications 1 à 4, dans lequel
l'énergie de sortie du troisième rayon de balayage par rayonnement est plus élevée que celle du premier rayon de balayage par rayonnement et du deuxième rayon de balayage par rayonnement, et/ou la dose de sortie du troisième rayon de balayage par rayonnement est plus élevée que celle du premier rayon de balayage par rayonnement et du deuxième rayon de balayage par rayonnement.

6. Système d'inspection par rayonnement selon l'une quelconque des revendications 1 à 5, comprenant en outre :
une première unité de détection qui détecte si le véhicule devant être inspecté (3) entre dans une zone d'inspection du système d'inspection par rayonnement ; et/ou
une seconde unité d'inspection, qui est couplée au dispositif d'inspection d'angle de vue vertical, et qui détecte qu'une partie du véhicule devant être inspecté (3) qui a besoin d'une protection de rayonnement passe par le dispositif d'inspection d'angle de vue vertical, et génère un premier signal de passage, le dispositif d'inspection d'angle de vue vertical étant configuré pour sortir le premier rayon de balayage par rayonnement ou le deuxième rayon de balayage par rayonnement après réception du premier signal de passage ; et/ou
une troisième unité de détection, qui est couplée au dispositif d'inspection d'angle de vue horizontal, et qui détecte que la partie du véhicule devant être inspecté (3) qui a besoin d'une protection de rayonnement passe par le dispositif d'inspection d'angle de vue horizontal, et génère un second signal de passage, le dispositif d'inspection d'angle de vue horizontal étant configuré pour sortir le troisième rayon de balayage par rayonnement ou le quatrième rayon de balayage par rayonnement après réception du second signal de passage.

7. Procédé d'inspection par rayonnement pour inspecter un véhicule devant être inspecté (3) en utilisant le système d'inspection par rayonnement selon l'une quelconque des revendications 1 à 6, **caractérisé en ce qu'**il comprend les étapes consistant à :
sélectionner l'un du mode d'inspection standard et du mode d'inspection rapide en accord avec le caractère d'un chargement de véhicule sur le véhicule devant être inspecté (3) ; et
inspecter le véhicule devant être inspecté (3) dans le mode d'inspection sélectionné.

8. Procédé d'inspection par rayonnement selon la revendication 7, dans lequel l'étape consistant à sélectionner l'un du mode d'inspection standard et du mode d'inspection rapide en accord avec le caractère du chargement de véhicule sur le véhicule devant être inspecté (3) comprend de déterminer le chargement de véhicule sur le véhicule devant être inspecté (3) comme étant un chargement à charge légère ou un chargement à charge lourde en accord avec le caractère du chargement de véhicule, dans lequel quand le chargement de véhicule est déterminé comme étant un chargement à charge lourde, le mode d'inspection standard est sélectionné ; et
quand le chargement de véhicule est déterminé comme étant un chargement de véhicule à charge légère, le mode d'inspection rapide sélectionné.

9. Procédé d'inspection par rayonnement selon la revendication 7 ou 8, dans lequel le caractère du chargement de véhicule comprend au moins un élément parmi une catégorie de chargement, une quantité de chargement, un poids de chargement, une densité de chargement, une structure de chargement ou une méthode de charge de chargement.

10. Procédé d'inspection par rayonnement selon l'une quelconque des revendications 7 à 9, dans lequel, quand le véhicule devant être inspecté (3) est inspecté dans le mode d'inspection standard, le procédé comprend : après que la partie du véhicule devant être inspecté (3) qui a besoin d'une protection de rayonnement est passée par le dispositif d'inspection d'angle de vue vertical, le dispositif d'inspection d'angle de vue vertical sort le premier rayon de balayage par rayonnement ; et/ou
après que le véhicule devant être inspecté (3) est en stationnement, le dispositif d'inspection d'angle de vue horizontal sort le troisième rayon de balayage par rayonnement.

11. Procédé d'inspection par rayonnement selon l'une quelconque des revendications 7 à 10, dans lequel, quand le véhicule devant être inspecté (3) est inspecté dans le mode d'inspection rapide, le procédé comprend :
après que la partie du véhicule devant être inspecté (3) qui a besoin d'une protection de rayonnement est passée par le dispositif d'inspection d'angle de vue vertical, le dispositif d'inspection d'angle de vue vertical sort le deuxième rayon de balayage par rayonnement ; et/ou
après que la partie du véhicule devant être inspecté (3) qui a besoin d'une protection de rayonnement est passée par le dispositif d'inspection d'angle de vue horizontal, le dispositif d'inspection d'angle de vue horizontal sort le quatrième rayon de balayage par rayonnement.
